# EUROPEAN PATENT APPLICATION

(11) **EP 4 848 751 A1**
(43) Date of publication of application: **02.12.2026**
(21) Application number: 25829403.2
(22) Date of filing: 10.04.2025
(51) Int. Cl.: H04Q 11/00

(54) **BATCH REROUTING METHOD, APPARATUS AND SYSTEM FOR MESH WHITE-BOX OPTICAL NETWORK**

(30) Priority: 17.06.2024 CN 202410775881
(71) Applicant: Accelink Technologies Co., Ltd., Wuhan, Hubei 430000 (CN); Accelink Information Technologies Co., Ltd., Wuhan, Hubei 430074 (CN)
(72) Inventor: LU, Gang, Wuhan, Hubei 430000 (CN); XIAO, Li, Wuhan, Hubei 430000 (CN); XU, Jian, Wuhan, Hubei 430000 (CN); YU, Jiekui, Wuhan, Hubei 430000 (CN)
(74) Representative: Patentgruppen A/S
(86) International application number: PCT/CN2025/088309
(87) International publication number: WO 2025/260918

(57) **Abstract**

The present invention relates to the technical field of communications, and provides a batch rerouting method, apparatus and system for a mesh white-box optical network. The method comprises: acquiring each original path to be deleted and/or each rerouting path to be added; determining channel services required to be executed by each WSS device according to each of the original paths and/or each of the rerouting paths; allocating, according to the WSS configuration situation, all channel services into one or more task groups; wherein channel services of multiple WSS devices associated with each other are allocated into different task groups, and channel services of multiple WSS devices not associated with each other are allocated into the same task group; and distributing each task group sequentially, so that each WSS device executes the channel services in the task groups to implement batch rerouting. The present invention allocates multiple WSS devices associated with each other into different task groups, and allocates multiple WSS devices not associated with each other into the same task group, thereby avoiding the occurrence of blocking and ensuring fast completion of rerouting.

## Description

### CROSS REFERENCE TO RELATED APPLICATION

This application claims priority to the following patent application:
(1) Chinese Patent Application No. 202410775881.8 filed with the China National Intellectual Property Administration on June 17, 2024, entitled "Batch Rerouting Method, Apparatus and System for Mesh White-box Optical Network".

### TECHNICAL FIELD

The present invention relates to the technical field of communications, in particular to a batch rerouting method, apparatus and system for a mesh white-box optical network.

### BACKGROUND

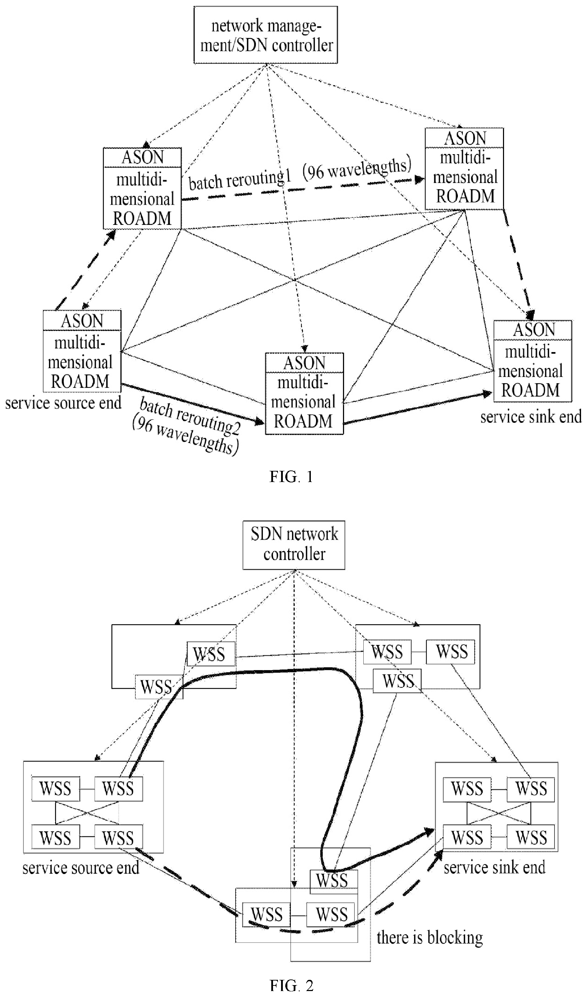

In conventional optical networks, an Automatically Switched Optical Network (ASON) function can be provided to complete path rerouting in mesh networks, so as to ensure that when faults such as optical fiber interruptions occur, services can be effectively and quickly restored to backup paths, thereby ensuring unobstructed service optical paths, as shown in Figure 1. With the rapid development of white-box optical networks, optical communication devices have gradually evolved from large chassis devices with plug-in proprietary platforms to miniaturized box-type devices, and decoupling is realized under the support of the Yet Another Next Generation (YANG) model, making standardization and customization a trend. Due to device level decoupling, ASON functional support is lost at the device level, and if similar service recovery capability is to be achieved, the optical network management and control system is required to implement path rerouting in a centralized manner.

In the prior art, for decoupled optical networks, Reconfigurable Optical Add-Drop Multiplexer (ROADM) devices used for wavelength level scheduling are decoupled into multiple unidirectional Wavelength-Selective Switch (WSS) single boards (including source-side add WSS single boards, drop WSS single boards, and pass-through WSS single boards). These WSS single boards may be located in multiple different independent 1U or 2U miniaturized chassis devices and are managed by different main control units. For providing the Optical Channel (OCh) level services, the rerouting action of the channel can be triggered according to a self-determined optical fiber fault alarm or an Optical Channel Protection (OCHP) switching event, so as to migrate the service from the faulty route to a non-faulty route. The main work of the migration is to migrate all media channel configurations of the respective WSSs on the original path to the media channel configurations of the respective WSSs on the new path, and after the service route is replaced, it is ensured that the end-to-end service is not affected by the fault. For OCh level rerouting, existing implementations generally adopt a mode in which each channel independently triggers and independently completes the rerouting operation process of its own service. This mode, because each channel is only responsible for maintaining its own service rerouting, can be executed independently without being affected by other channels, and is relatively reliable from a service operation perspective. However, if the optical layer device is a white-box miniaturized device, based on cost and miniaturization considerations, the processing performance of its main control single board is generally much lower than that of conventional large-scale Optical Transport Network (OTN) optical layer devices. Therefore, when multiple requests are processed simultaneously, massive blocking occurs, as shown in FIG. 2. Meanwhile, the decoupling of ROADM in the white-box environment also causes multiple WSS single boards to be distributed in different chassis, and combined with the mesh extent of the network itself, this results in very important issues of handling blocking and concurrency.

In view of this, overcoming the defects existing in the prior art is an urgent problem to be solved in this technical field.

### SUMMARY

The technical problem to be solved by the present invention is that when the optical layer device is a miniaturized device, the processing performance of the main control processing unit is relatively poor, resulting in massive blocking during batch rerouting due to simultaneous processing of multiple requests.

The present invention adopts the following technical solutions:
In a first aspect, the present invention provides a batch rerouting method for a mesh white-box optical network, wherein WSS configuration situation of each site is pre-stored in a network controller, the WSS configuration situation comprises information related to each main control processing unit and information related to WSS devices using each main control processing unit, and the method comprises:
acquiring each of original paths to be deleted and/or each of rerouting paths to be added;
determining channel services required to be executed by each WSS device according to each of the original paths and/or each of the rerouting paths;
allocating, according to the WSS configuration situation, all channel services into one or more task groups; wherein channel services of multiple WSS devices associated with each other are allocated into different task groups, and channel services of multiple WSS devices not associated with each other are allocated into the same task group; the multiple WSS devices associated with each other are multiple WSS devices that use a common main control processing unit to execute channel services, and the multiple WSS devices not associated with each other are multiple WSS devices each of which uses an independent main control processing unit to execute channel services; and
distributing each task group sequentially, so that each WSS device executes the channel services in the task group to implement batch rerouting.

Preferably, the allocating, according to the WSS configuration situation, all channel services into one or more task groups specifically comprises:
according to the WSS configuration situation, sequentially allocating channel services in the remaining channel services of the i-th batch into the i-th task group, until all channel services are allocated into corresponding task groups; wherein the remaining channel services of the i-th batch are the channel services that have not been allocated to a task group after the allocation of the first i-1 task groups has been completed;
the allocating channel services in the remaining channel services of the i-th batch into the i-th task group specifically comprises: taking each main control processing unit as a first main control processing unit, respectively; searching, from all WSS devices corresponding to the channel services of the i-th batch, for a first WSS device that uses the first main control processing unit; and
allocating the channel services of one first WSS device into the i-th task group.

Preferably, when there is no constraint on the number of channel services that one WSS device can process in a single task group, the allocating the channel services of one first WSS device into the i-th task group specifically comprises:
allocating all channel services of one first WSS device into the i-th task group.

Preferably, when the number of channel services that one WSS device can process in a single task group is constrained to N, the allocating the channel services of one first WSS device into the i-th task group specifically comprises:
allocating N channel services of one first WSS device into the i-th task group, and retaining the remaining channel services of the first WSS device in the remaining channel services of the i-th batch for the next allocation.

Preferably, the determining channel services required to be executed by each WSS device according to each of the original paths and/or each of the rerouting paths specifically comprises:
determining, according to each original path, deletion operation channel services required to be executed by each WSS device, and determining, according to each rerouting path, addition operation channel services required to be executed by each WSS device; and
after the execution of each deletion operation channel service is completed, executing the addition operation channel services; or, after the execution of each addition operation channel service is completed, executing the deletion operation channel services; or, executing the deletion operation channel service and the addition operation channel service together.

Preferably, for a preset rerouting event, each task group is pre-calculated and pre-stored, and when rerouting is triggered, each task group is distributed.

In a second aspect, the present invention further provides a batch rerouting apparatus for a mesh white-box optical network, configured to implement the batch rerouting method for a mesh white-box optical network according to the first aspect, the apparatus comprising:
at least one processor; and a memory communicatively connected to the at least one processor; wherein the memory stores instructions executable by the at least one processor, and the instructions, when executed by the processor, are used to perform the batch rerouting method for a mesh white-box optical network according to the first aspect.

In a third aspect, the present invention further provides a batch rerouting apparatus for a mesh white-box optical network, the apparatus comprising:
at least one processor; and a memory communicatively connected to the at least one processor; wherein the memory stores instructions executable by the at least one processor, and the instructions, when executed by the processor, are used to receive channel services from the batch rerouting apparatus for a mesh white-box optical network according to the second aspect, and execute the channel services to implement the batch rerouting.

In a fourth aspect, the present invention further provides a non-volatile computer storage medium, wherein the computer storage medium stores computer-executable instructions, and the computer-executable instructions, when executed by one or more processors, are used to complete the method according to the first aspect.

In a fifth aspect, a chip is provided, comprising: a processor and an interface, used to call from a memory and run a computer program stored in the memory, to execute the method according to the first aspect.

In a sixth aspect, a computer program product containing instructions is provided, wherein when the instructions are run on a computer or a processor, the computer or the processor is caused to execute the method according to the first aspect.

In a seventh aspect, a batch rerouting system for a mesh white-box optical network is provided, comprising the batch rerouting apparatus for a mesh white-box optical network according to the second aspect and the batch rerouting apparatus for a mesh white-box optical network according to the third aspect, wherein the batch rerouting apparatus for a mesh white-box optical network according to the second aspect uses the batch rerouting method for a mesh white-box optical network according to the first aspect to implement interaction with the batch rerouting apparatus for a mesh white-box optical network according to the third aspect.

The present invention allocates multiple WSS devices associated with each other into different task groups, and distributes each of the task groups sequentially to make each of the task groups execute serially, thereby avoiding the generation of the blocking; and, in order to improve rerouting efficiency, the present invention also allocates multiple WSS devices not associated with each other into the same task group, so that multiple channel services in the task group execute in parallel, thereby ensuring fast completion of rerouting.

### BRIEF DESCRIPTION OF THE DRAWINGS

In order to more clearly illustrate the technical solutions of the embodiments of the present invention, the drawings required in the description of the embodiments will be briefly introduced below. Obviously, the drawings described below are merely some embodiments of the present invention, and for those ordinary skilled in the art, other drawings can be obtained based on these drawings without creative effort.
FIG. 1 is a schematic diagram of a batch rerouting method for a mesh white-box optical network in the prior art provided by an embodiment of the present invention;
FIG. 2 is a scenario schematic diagram of a batch rerouting method for a mesh white-box optical network provided by an embodiment of the present invention;
FIG. 3 is a flowchart schematic diagram of a first batch rerouting method for a mesh white-box optical network provided by an embodiment of the present invention;
FIG. 4 is a scenario schematic diagram of a batch rerouting method for a mesh white-box optical network provided by an embodiment of the present invention;
FIG. 5 is a flowchart schematic diagram of a second batch rerouting method for a mesh white-box optical network provided by an embodiment of the present invention;
FIG. 6 is a schematic diagram of a first batch rerouting method for a mesh white-box optical network provided by an embodiment of the present invention;
FIG. 7 is a schematic diagram of a second batch rerouting method for a mesh white-box optical network provided by an embodiment of the present invention;
FIG. 8 is a schematic diagram of a third batch rerouting method for a mesh white-box optical network provided by an embodiment of the present invention;
FIG. 9 is a flowchart schematic diagram of a third batch rerouting method for a mesh white-box optical network provided by an embodiment of the present invention;
FIG. 10 is a schematic diagram of a fourth batch rerouting method for a mesh white-box optical network provided by an embodiment of the present invention;
FIG. 11 is a schematic diagram of a fifth batch rerouting method for a mesh white-box optical network provided by an embodiment of the present invention;
FIG. 12 is a schematic diagram of a sixth batch rerouting method for a mesh white-box optical network provided by an embodiment of the present invention;
FIG. 13 is a schematic diagram of a seventh batch rerouting method for a mesh white-box optical network provided by an embodiment of the present invention;
FIG. 14 is a schematic diagram of an eighth batch rerouting method for a mesh white-box optical network provided by an embodiment of the present invention;
FIG. 15 is a schematic diagram of a ninth batch rerouting method for a mesh white-box optical network provided by an embodiment of the present invention;
FIG. 16 is a schematic diagram of a tenth batch rerouting method for a mesh white-box optical network provided by an embodiment of the present invention;
FIG. 17 is an architecture schematic diagram of a batch rerouting apparatus for a mesh white-box optical network provided by an embodiment of the present invention.

### DETAILED DESCRIPTION

In order to make the objectives, technical solutions and advantages of the present invention clearer, the present invention will be further described in detail below with reference to the accompanying drawings and embodiments. It should be understood that the specific embodiments described herein are merely used to explain the present invention and are not intended to limit the present invention.

Unless otherwise required by the context, throughout the descriptions and the claims, the term "comprise/include" is interpreted as an open inclusive meaning, namely "including, but not limited to". In the description of the specification, terms such as "one embodiment", "some embodiments", " example embodiment", "example", "specific example" or "some examples" are intended to indicate that a specific feature, structure, material or characteristic associated with the embodiment or example is included in at least one embodiment or example of the present disclosure. The schematic representations of the above terms do not necessarily refer to the same embodiment or example. In addition, the specific features, structures, materials or characteristics may be included in any suitable manner in any one or more embodiments or examples, that is, although they may be carried in the embodiments or examples of the above terms due to order and position, etc., they are not limited to being combined and carried in one embodiment or example.

In the description of the present invention, the terms "first" and "second" are merely used for descriptive purposes and cannot be understood as indicating or implying relative importance or implicitly specifying the quantity of indicated technical features. Thus, features defined with "first" or "second" may explicitly or implicitly include one or more of such features. In the description of the embodiments of the present disclosure, unless otherwise specified, "multiple/a plurality of" means two or more. In addition, for example, in the description, the same type of nouns may be described as two independent entities by adding "A" and "B" at the end, and in this case, the corresponding features defined with "A" and "B" are merely used to distinguish the same type of entities for descriptive purposes, and cannot be understood as indicating or implying relative importance or implicitly specifying the quantity of indicated technical features.

In the description of the present invention, expressions such as "A and/or B" (where A and B are used to represent specific feature contents) are involved, and the corresponding expressions include the following three combinations: only A, only B, and a combination of A and B.

The terms "about", "approximately" or "roughly" used in the present invention include the stated value and an average value within an acceptable deviation range of a specific value, wherein the acceptable deviation range is determined by those ordinary skilled in the art taking into account the measurement in question and errors associated with the measurement of the specific quantity (i.e., limitations of the measurement system).

In addition, the technical features involved in the various embodiments of the present invention described below may be combined with each other as long as they do not conflict with each other.

### Embodiment 1:

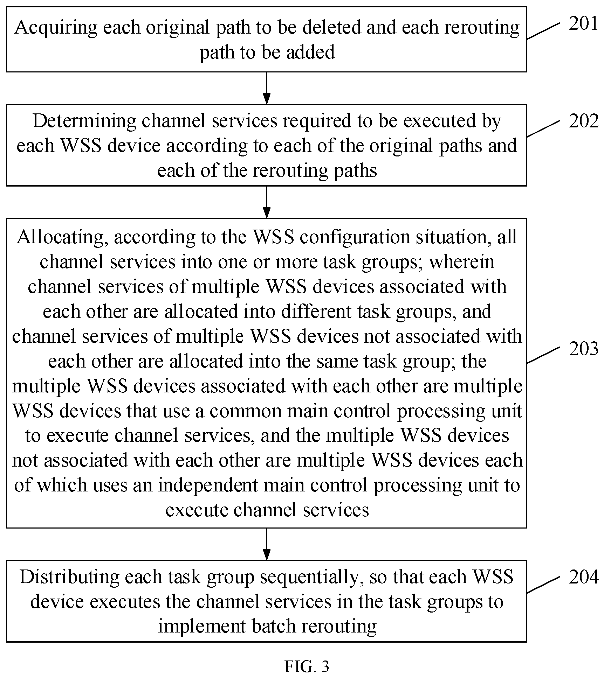

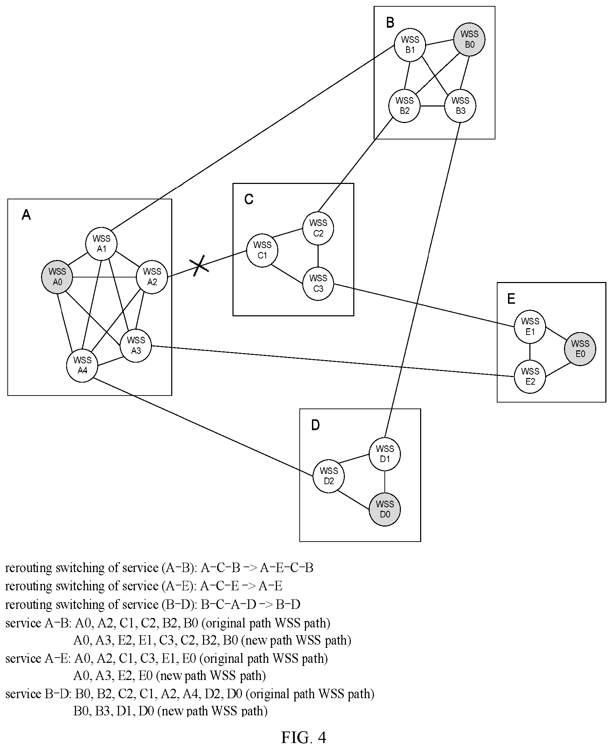

In the prior art, when the optical layer device is a miniaturized device, due to the relatively poor processing performance of the main control processing unit, massive blocking occurs during batch rerouting due to simultaneous processing of multiple requests. To address this problem, in order to ensure the configuration reliability of the media channels of the WSSs, when performing channel-level rerouting, a feasible technical means is to perform serial media channel configuration on the WSSs with an appropriate delay processing. The consequence is that concurrent access will be greatly restricted, and when there are many rerouting services due to fiber interruption (e.g., 96 wavelengths), the actual rerouting completion time is prolonged, affecting rerouting efficiency. To solve this problem, Embodiment 1 of the present invention provides a batch rerouting method for a mesh white-box optical network, and the execution subject of the method is a network controller. WSS configuration situation of each site is pre-stored in the network controller, and the WSS configuration situation includes related information of each main control processing unit and related information of WSS devices using each main control processing unit, as shown in FIG. 3, and the method comprises:
in step 201, acquiring each original path to be deleted and/or each rerouting path to be added;
in step 202, determining channel services required to be executed by each WSS device according to each of the original paths and/or each of the rerouting paths;
in step 203, allocating, according to the WSS configuration situation, all channel services into one or more task groups; wherein channel services of multiple WSS devices associated with each other are allocated into different task groups, and channel services of multiple WSS devices not associated with each other are allocated into the same task group; the multiple WSS devices associated with each other are multiple WSS devices that use a common main control processing unit to execute channel services, and the multiple WSS devices not associated with each other are multiple WSS devices each of which uses an independent main control processing unit to execute channel services;
for example, as shown in FIG. 4, a networking topology diagram of a Mesh white-box optical network including 5 sites, wherein for simplicity of description, only WSS assemblies related to rerouting operations are marked, while other assemblies such as Optical Amplifier (OA), etc. are not marked. Among them, A, B, C, D, and E respectively represent 5 sites. WSS devices are marked as Xk (where X is the site, k is a serial number, with values 0,1,2...). For example, multiple WSS devices of site A are respectively represented as A1, A2, A3, A4, etc., and are indicated by white-background circles in the figure, wherein X0 represents an add/drop WSS for services, used only as a source end or sink end of the service, and not used as a pass-through WSS, for example, A0, B0, C0, D0 and E0 all represent add/drop WSSs, and are indicated by gray-background circles in the figure. The WSS devices are also referred to as WSS boards, or simply WSSs, in subsequent embodiments.

Assume the WSS configuration situation is as shown in the following table:

| main control processing units | WSS devices |
|---|---|
| 0 | A0 |
| 1 | A1 |
| 0 | A2 |
| 2 | A3 |
| 3 | A4 |
| 4 | B0 |
| 5 | B1 |
| 4 | B2 |
| 6 | B3 |
| 7 | C1 |
| 7 | C2 |
| 7 | C3 |
| 8 | D0 |
| 9 | D1 |
| 10 | D2 |
| 11 | E0 |
| 12 | E1 |
| 13 | E2 |

That is, the WSS boards of C1, C2, C3 are in the same chassis, the WSS boards of B0, B2 are in the same chassis, and the WSS boards of A0, A2 are in the same chassis. Multiple WSSs in the same chassis share one main control processing unit, that is, C1, C2, C3 use one common main control processing unit (No. 7), B0, B2 use one common main control processing unit (No. 4), and A0, A2 use one common main control processing unit (No. 0). Then C1, C2 and C3 can be regarded as a group of multiple WSS devices associated with each other, B0 and B2 can be regarded as a group of multiple WSS devices associated with each other, and A0 and A2 can be regarded as a group of multiple WSS devices associated with each other; while C1 and any WSS device other than C2, C3 can be regarded as multiple WSS devices not associated with each other, for example, C1 is not associated with B0 and A2.

In step 204, distributing each task group sequentially, so that each WSS device executes the channel services in the task groups to implement batch rerouting. The distributing each task group sequentially specifically comprises:
distributing all channel services in the i-th task group to the corresponding WSS devices, and after all channel services in the i-th task group have been executed, distributing all channel services in the (i+1)-th task group to the corresponding WSS devices, until the channel services in all task groups have been executed; wherein distributing all channel services in the i-th task group may be implemented based on the rpc operation of the netconf protocol.

Since, when multiple WSS devices sharing one main control processing unit execute corresponding tasks at the same time, obvious blocking will occur, this embodiment allocates multiple WSS devices associated with each other into different task groups, and distributes each of the task groups sequentially to make each task group execute serially, thereby avoiding occurrence of the blocking; and, in order to improve rerouting efficiency, this embodiment also allocates multiple WSS devices not associated with each other into the same task group, so that multiple channel services in the task group execute in parallel, thereby ensuring fast completion of rerouting.

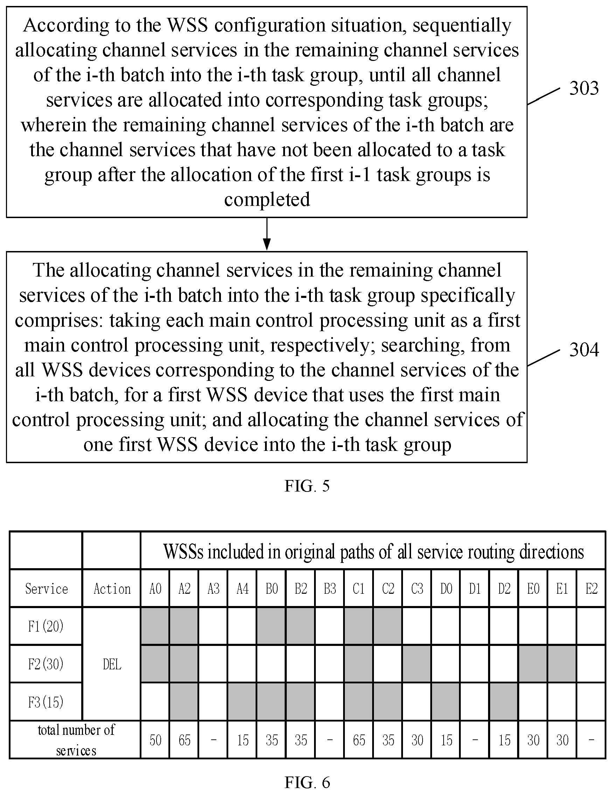

In an optional implementation, the allocating, according to the WSS configuration situation, all channel services into one or more task groups, as shown in FIG. 5, specifically comprises:
in step 301, according to the WSS configuration situation, sequentially allocating channel services in the remaining channel services of the i-th batch into the i-th task group, until all channel services are allocated into corresponding task groups; wherein the remaining channel services of the i-th batch are the channel services that have not been allocated to a task group after the allocation of the first i-1 task groups is completed; the remaining channel services of the first batch are all channel services determined in step 202.
in step 302, the allocating channel services in the remaining channel services of the i-th batch into the i-th task group specifically comprises: taking each main control processing unit as a first main control processing unit, respectively; searching, from all WSS devices corresponding to the channel services of the i-th batch, for a first WSS device that uses the first main control processing unit; and allocating the channel services of one first WSS device into the i-th task group.

Still taking the networking topology diagram of FIG. 4 as an example, it is assumed that there are three service routing directions, namely A->B (20 wavelengths, spectrum set collectively denoted as F1), A->E (30 wavelengths, spectrum set collectively denoted as F2), and B->D (15 wavelengths, spectrum set collectively denoted as F3). The faulty link is A-C, and the original paths and rerouting paths of the three service routing directions obtained are respectively: the original path of the services of service routing direction (A-B): A-C-B, and the rerouting path: A-E-C-B; the original path of the services of service routing direction (A-E): A-C-E, and the rerouting path: A-E; and the original path of the services of service routing direction (B-D): B-C-A-D, and the rerouting path: B-D.

According to each original path and each rerouting path, the involved WSSs are determined as follows:
Service A->B original path: A0, A2, C1, C2, B2, B0. Rerouting path: A0, A3, E2, E1, C3, C2, B2, B0.
Service A->E original path: A0, A2, C1, C3, E1, E0. Rerouting path: A0, A3, E2, E0.
Service B->D original path: B0, B2, C2, C1, A2, A4, D2, D0. Rerouting path: B0, B3, D1, D0.

All operations of media channels to be deleted (i.e., each channel service) are aggregated onto each WSS assembly, and recorded in a corresponding relation table, as shown in FIG. 6, which includes the total number of wavelengths corresponding to each spectrum set (i.e., the number of channel services). The vertical direction shows that the WSS boards can be operated in combination. For example, WSS A0 needs centralized operation for the services of F1 set (20 wavelengths) and F2 set (30 wavelengths); and A2 needs centralized operation for the services of F1 set (20 wavelengths), F2 set (30 wavelengths), and F3 set (15 wavelengths).

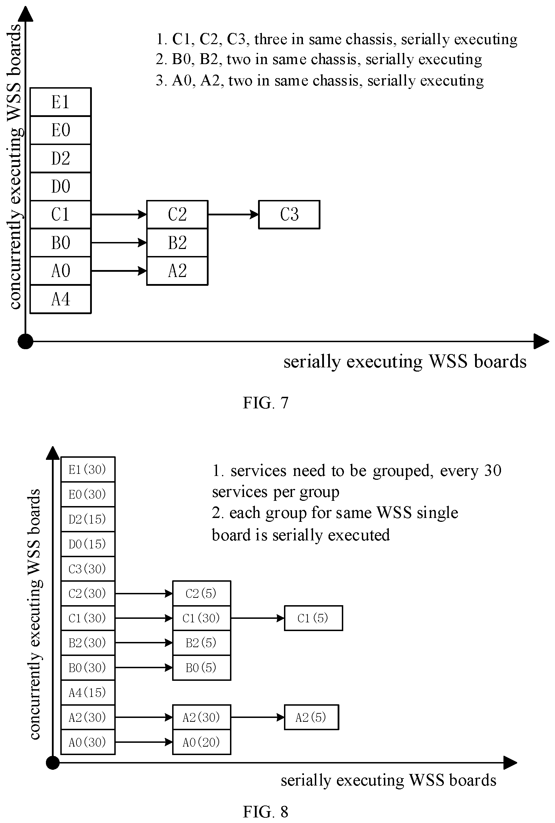

Still assuming the WSS configuration situation is that C1, C2, C3 are in the same chassis, B0, B2 are in the same chassis, and A0, A2 are in the same chassis, for each main control processing unit, the corresponding WSS device is selected, respectively, to obtain the task group arrangement as shown in FIG. 7, wherein the channel services of each WSS device arranged in one vertical column are allocated into one task group. For the main control processing unit number 7, since it is shared by C1, C2, C3, one WSS device (such as C1) is selected to participate in the first task group, and the remaining C2, C3 are left for the establishment of the second task group, for example, C2 is selected to participate in the second task group, and C3 participates in the third task group; similarly, for B0 and B2 sharing main control processing unit number 4, B0 participates in the first task group, and B2 participates in the second task group; for A0 and A2 sharing main control processing unit number 0, A0 participates in the first task group, and A2 participates in the second task group; the other WSS devices, because each exclusively uses one main control processing unit, are arranged to participate in the first task group, thereby forming the task group arrangement as shown in FIG. 7. It should be noted here that FIG. 7 shows WSS devices, and the channel services that each WSS device needs to execute are as shown in FIG. 6, for example, A0 needs to execute all channel services corresponding to F1 and F2. In this manner, those WSSs sharing one main control processing unit will be placed into a serial processing queue, while other WSSs can be placed into a concurrent processing queue for concurrent execution. The horizontal axis represents serially executing WSS boards, and the vertical axis represents parallel executing WSS boards.

In an optional implementation, when there is no constraint on the number of channel services that one WSS device can process in a single task group, the allocating the channel services of one first WSS device into the i-th task group specifically comprises: allocating all channel services of one first WSS device into the i-th task group, as shown in FIG. 7, wherein as shown in FIG. 6, in the first task group, A0 needs to process channel services of F1 (29 wavelengths) and F2 (30 wavelengths), totaling 50 wavelengths.

In actual use, due to limited processing resources, the number of channel services that a main control processing unit can process in a single task group is often limited, that is, there is a constraint on the number of channel services that one WSS device can process in a single task group. For this case, this embodiment also provides a preferred implementation, that is, when the number of channel services that one WSS device can process in a single task group is constrained to N, the allocating the channel services of one first WSS device into the i-th task group specifically comprises:
allocating N channel services of one first WSS device into the i-th task group, and retaining the remaining channel services of the first WSS device in the remaining channel services of the i-th batch for the next allocation, and when the number of remaining channel services of the first WSS device is less than N, then allocating all these channel services into the corresponding task group.

Taking an example where in FIG. 4 each WSS device uses its own main control processing unit, respectively, when the situation that the channel services required to be executed by each WSS device is as shown in FIG. 6, and the number of channel services that each main control processing unit can process is constrained to 30, the corresponding task group allocation is as shown in FIG. 8., since the channel services that C1 needs to execute include F1 (20 wavelengths), F2 (30 wavelengths) and F3 (15 wavelengths), totaling 65 channel services, in the first task group, channel services of 30 wavelengths are allocated (such as 10 wavelengths from F1 and F2), in the second task group, channel services of 30 wavelengths are allocated (such as the remaining 20 wavelengths of F2 and 10 wavelengths of F3), and in the third task group, channel services of 5 wavelengths are allocated (i.e., the remaining 5 wavelengths of F3), thereby forming the task group arrangement as shown in FIG. 8, where that in parentheses indicates the number of channel services corresponding to the respective WSS device in the respective task group.

In actual use, it is also feasible to allocate task groups only according to the constraint on the number of channel services, without considering whether the main control processing units are shared or not, thereby forming three optional implementations, specifically comprising:
The first implementation: namely the above steps 201-204, and the first implementation is also referred to as the deployment correlation strategy in subsequent embodiments.

The second implementation: allocating task groups only according to the constraint on the number of channel services, specifically: according to the WSS configuration situation, sequentially allocating channel services in the remaining channel services of the i-th batch into the i-th task group, until all channel services are allocated into corresponding task groups; wherein the remaining channel services of the i-th batch are the channel services that have not been allocated to a task group after the allocation of the first i-1 task groups is completed; wherein the allocating channel services in the remaining channel services of the i-th batch into the i-th task group specifically comprises: allocating N channel services corresponding to each WSS device in the remaining channel services of the i-th batch into the i-th task group, and retaining the rest channel services in the remaining channel services of the i-th batch for the next allocation; when the number of remaining channel services of the first WSS device is less than N, allocating all these channel services into the corresponding task group. The second implementation is also referred to as the service correlation strategy in subsequent embodiments.

The third implementation: considering both the constraint on the number of channel services and whether the main control processing units are shared or not, namely the above preferred implementation, and the third implementation is also referred to as the combined deployment correlation and service correlation strategy in subsequent embodiments.

In an optional implementation, the allocating the channel services of one first WSS device into the i-th task group may be: allocating the channel services corresponding to the first WSS device having the largest number of channel services in the remaining channel services of the i-th batch into the i-th task group, so as to ensure that resources as much as possible are utilized in the early stage, or, allocating the channel services corresponding to the first WSS device having the smallest number of channel services in the remaining channel services of the i-th batch into the i-th task group, so that the corresponding WSS device can complete its channel services as early as possible.

In practical application scenarios, the determining channel services required to be executed by each WSS device according to each of the original paths and/or each of the rerouting paths specifically comprises:
determining, according to each original path, deletion operation channel services required to be executed by each WSS device, and determining, according to each rerouting path, addition operation channel services required to be executed by each WSS device.

After the execution of each deletion operation channel service is completed, executing the addition operation channel services, that is, performing the above steps 201-204 on the deletion operation channel services to complete the deletion of the original paths, and then performing the above steps 201-204 on the addition operation channel services to complete the addition of the rerouting paths; or, after the execution of each addition operation channel service is completed, executing the deletion operation channel services, that is, performing the above steps 201-204 on the addition operation channel services to achieve the addition of the rerouting paths, and then performing the above steps 201-204 on the deletion operation channel services to achieve the deletion of the original paths; or, executing the deletion operation channel services and the addition operation channel services together, that is, performing the above steps 201-204 uniformly on both the deletion operation channel services and the addition operation channel services together.

In a preferred implementation, the method further comprises: for a preset rerouting event, pre-calculating to obtain each task group, pre-storing each task group, and distributing each task group when rerouting is triggered.

### Embodiment 2:

On the basis of the method described in Embodiment 1, the present invention, in combination with specific application scenarios and by means of technical expressions in relevant scenarios, describes the implementation process in the characteristic scenario of the present invention.

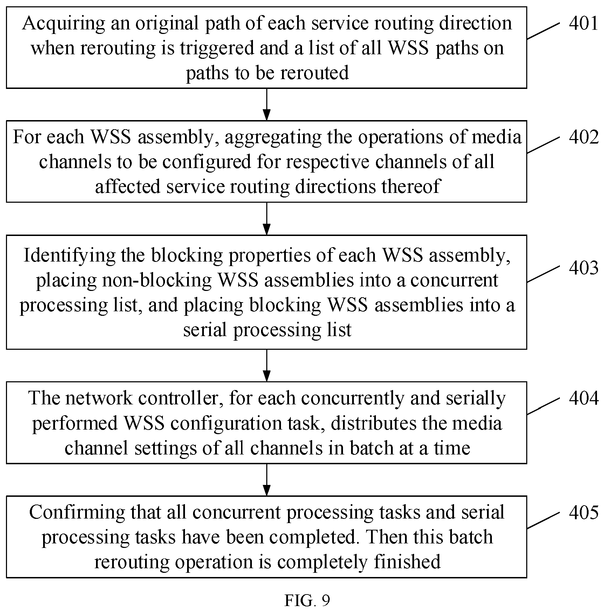

When channel-level path rerouting is performed in a decoupled optical network, for batch multi-wavelength service rerouting, a problem is caused that the actual rerouting completion time tends to be long, affecting rerouting efficiency. To solve the above technical problem, this embodiment provides a batch rerouting method for a mesh white-box optical network, as shown in FIG. 9, comprising:
in step 401, acquiring an original path of each service routing direction when rerouting is triggered and a list of all WSS paths on paths to be rerouted; wherein the paths of the original paths can be obtained directly, and the rerouting paths can be obtained according to paths calculated by routing, or preset paths, and the present invention does not limit the specific generation approach of the rerouting path.
in step 402, for each WSS assembly, aggregating the operations of media channels to be configured for respective channels of all affected service routing directions thereof; the aggregating operations are divided into media channel deletion operations and media channel creation operations of the WSSs. The deletion operations are for the media channels on the faulty original path, while the creation operations are for the media channels on the new rerouting path.
in step 403, identifying the blocking properties of each WSS assembly, placing non-blocking WSS assemblies into a concurrent processing list, and placing blocking WSS assemblies into a serial processing list, that is, allocating task groups according to the WSS configuration situation; wherein identifying the blocking properties of the WSSs may be based on multiple factors, including but not limited to the following situations:
   when multiple WSSs are deployed in the same chassis, because they share the main control processing unit of the same chassis, based on the processing capacity limitation of the main control unit, the operations of these WSS boards need to be adjusted to serial execution, so as to ensure that such operations of the multiple WSS boards in the same chassis are executed serially; and/or when there are too many channel services, and simultaneous distribution in one rpc (remote procedure call) operation would impose high pressure on the main control board, all channel services of a single WSS board may be grouped, and multiple groups are executed serially. That is, the same WSS board may also be set to be that multiple sub-operations are executed serially. The allocation and setting for different blocking states may be implemented by different blocking handling strategies to set different concurrent and serial processing lists. Including but not limited to the following:
   Deployment correlation strategy: if different WSS boards are deployed in the same chassis, the configuration operations of the two WSS boards are correlated and need to be processed serially, and enter into the serial processing list.

Service correlation strategy: if a WSS board has a limit on the number of media channel configurations of the services that can be distributed at a time, all channel services distributed for the same WSS board may be grouped (either evenly grouped or in a customized manner according to service SLA, etc.), and different groups are allocated into a serial list. The number of services in each group can be configured as needed.

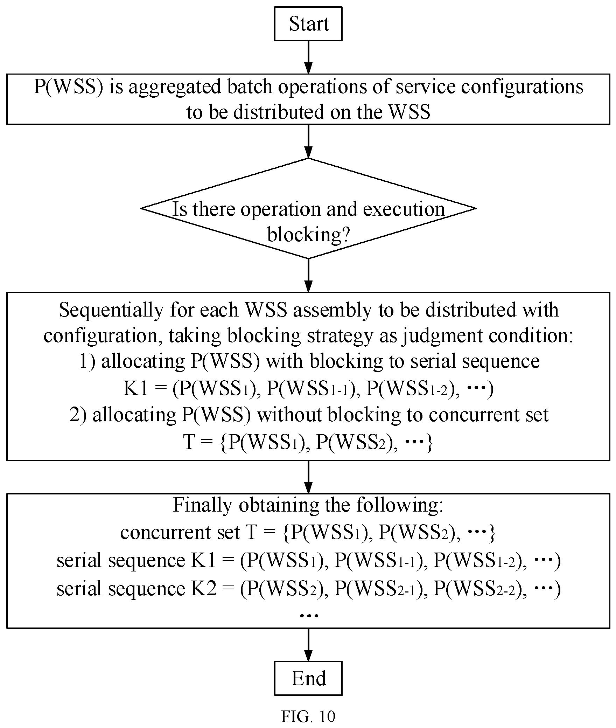

Combined deployment correlation and service correlation strategy: taking into account comprehensive factors of both whether WSSs are deployed in the same chassis and the limit on the number of service channels that can be centrally configured at a time on a WSS single board, parallel and serial grouping settings are performed. The specific blocking allocation process of the WSSs is as shown in the process of FIG. 10.

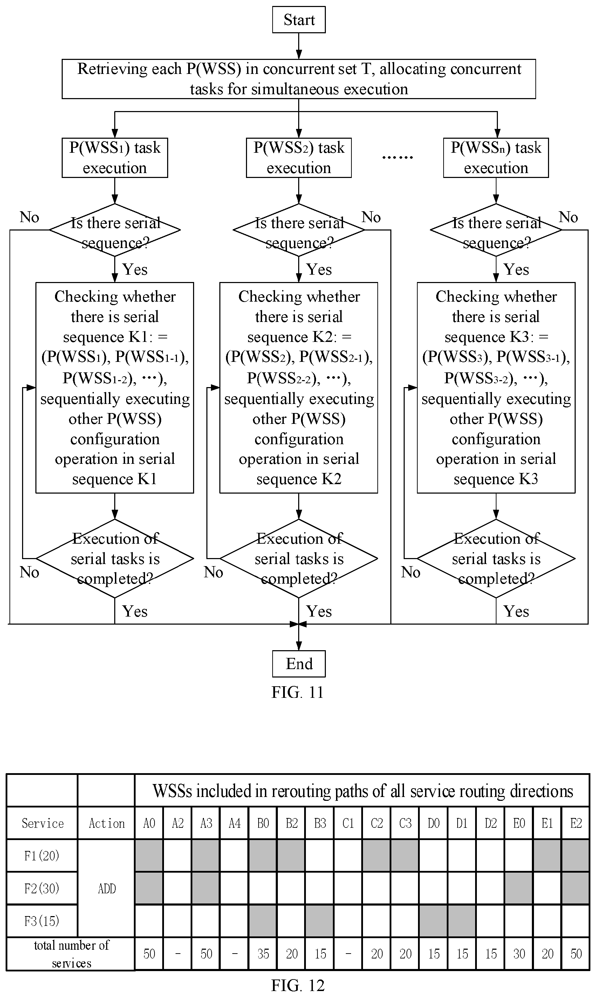

In step 404, the network controller, for each concurrently and serially executed WSS configuration task, distributes the media channel settings of all channels in batch at a time (i.e., distributing one task group); specifically: according to the set and list of concurrent and serial execution, the processing is performed according to the process shown in FIG. 11. First, all parallel operations are executed, and after each parallel task is completed, the operations in its associated serial sequence are executed sequentially and respectively. The distribution of media channel configurations of batch channels can be configured based on rpc operations of the netconf protocol, but not limited to this interface mode, and the same is applicable to operations that can provide similar batch configuration interfaces.

In step 405, confirming that all concurrent processing tasks and serial processing tasks have been completed. Then this batch rerouting operation is completely finished.

This embodiment is applicable to topologies composed of decoupled optical layer WSSs, including both large-scale mesh topologies and point-to-point topologies.

A complete rerouting operation is divided into two processes: deletion of media channels for the WSSs of the original connections, and creation of media channels for the WSSs of the rerouting paths. In specific operations, based on different device capabilities, either the order of deletion first and then creation, or the order of creation first and then deletion, may be adopted, and the method of the present invention does not limit the execution order.

The media channel configurations of the batch channels include bidirectional media channel settings, and the initial VOA values of the media channels may use default values or may be arbitrarily specified by the user, and the method does not limit this.

This embodiment combines the media channels in overlapping WSS nodes existing in multi-wavelength services, distributes the multi-wavelength media channel configurations at a time, and, according to the current blocking state of each WSS, divides the processing of multiple WSSs into concurrent processing and serial processing portions, each of which independently executes to complete all the rerouting media channel configuration operations. The present method does not conflict with existing channel rerouting methods, and can serve as a supplement thereto, and can also be defined as a routing strategy, triggered for use under specific conditions, and dynamically adjusts the current rerouting media channel distribution mechanism according to different strategy configurations on the controller. It has the advantages of easy deployment, customizability, and low cost.

The method of this embodiment is described in detail below with a specific application scenario. As shown in FIG. 4, it is a networking topology diagram of a Mesh white-box optical network including 5 sites, wherein for simplicity of description, only WSS assemblies related to rerouting operations are marked, while other assemblies such as OA are not marked. The provisions are as follows:
A, B, C, D, E respectively represent 5 sites. The WSS labeling method is Xk (where X is the site, k is a serial number, with values 0,1,2...). For example, multiple WSSs of site A are respectively represented as A1, A2, A3, A4, etc., represented by white-background circles in the figure. X0 represents an add/drop WSS for services, used only as a source end or sink end of the service, and not used as a pass-through WSS, for example, A0, B0, C0, D0, E0 all represent add/drop WSSs, represented by gray-background circles in the figure. There are three types of service routing directions: A->B (20 wavelengths, spectrum set collectively denoted as F1), A->E (30 wavelengths, spectrum set collectively denoted as F2), and B->D (15 wavelengths, spectrum set collectively denoted as F3). The faulty link is A-C, and the original paths and rerouting paths of the three service routing directions are respectively: the original path of the services in the service routing direction (A-B): A-C-B, and the rerouting path: A-E-C-B; the original path of the services in the service routing direction (A-E): A-C-E, and the rerouting path: A-E; and the original path of the services in the service routing direction (B-D): B-C-A-D, and the rerouting path: B-D.

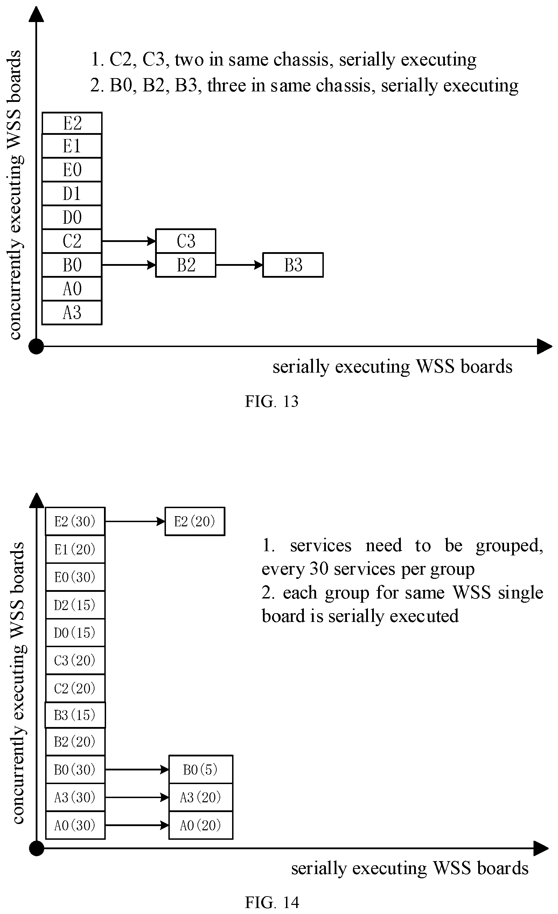

Taking the first implementation in Embodiment 1, i.e., the deployment correlation strategy, as an example, the process of applying the method of this embodiment in the above specific application scenario is as follows:
(1) When a fiber interruption occurs and rerouting is triggered, the network controller obtains the WSS list of the original paths and rerouting paths of each service routing direction.
   Service A->B original path: A0, A2, C1, C2, B2, B0. Rerouting path: A0, A3, E2, E1, C3, C2, B2, B0.
   Service A->E original path: A0, A2, C1, C3, E1, E0. Rerouting path: A0, A3, E2, E0.
   Service B->D original path: B0, B2, C2, C1, A2, A4, D2, D0. Rerouting path: B0, B3, D1, D0.
(2) As shown in FIG. 6, the network controller aggregates all operations of media channels to be deleted onto each WSS assembly, and records them in the corresponding relation table, including the total number of wavelengths. The vertical direction shows that the WSS board can be operated in combination. For example, WSS A0 needs centralized operations for the services of F1 set (20 wavelengths) and F2 set (30 wavelengths); and A2 needs centralized operations for the services of F1 set (20 wavelengths), F2 set (30 wavelengths), and F3 set (15 wavelengths).
(3) The network controller, according to the current setting strategy, identifies the blocking status of each WSS and performs corresponding grouping execution processing. Currently, according to the deployment correlation strategy, as shown in FIG. 7, the WSS boards of C1, C2, C3 are in the same chassis, the WSS boards of B0, B2 are in the same chassis, and the WSS boards of A0, A2 are in the same chassis. Therefore, the WSSs in the same chassis have obvious blocking restrictions because they share a main control processing unit, and these WSSs are placed into a serial processing queue, while other WSSs can be placed into a concurrent processing queue for concurrent execution. The horizontal axis represents serially executing WSS boards, and the vertical axis represents parallel executing WSS boards. The grouping execution situation is as shown in FIG. 7.
(4) The network controller starts concurrent processing tasks, and for each concurrently executed WSS configuration task, distributes media channel deletion for all channels in batch at a time. For each serially executed WSS configuration task, it is executed sequentially according to the serial execution list, and during execution, media channel configurations of all channels are also distributed sequentially until all deletions are completed. Through the above process, that is, a batch rerouting path deletion process is completed, all media channels on the original paths are deleted.
(5) All operations of media channels to be added are aggregated onto each WSS assembly. As shown in FIG. 12, according to the service routing directions and routing information, the wavelengths to be added for each service involved in each WSS are aggregated, and the total number of wavelengths to be configured on each WSS single board is counted. For example, WSS board A0 needs centralized operations for the services of F1 (20) and F2 (30); and A2 needs centralized operations for the services of F1 (20), F2 (30), and F3 (15).
(6) The network controller, according to the deployment correlation strategy: the WSS boards of C1, C2, C3 are in the same chassis, the WSS boards of B0, B2 are in the same chassis, and the WSS boards of A0, A2 are in the same chassis. Therefore, the WSSs in the same chassis have obvious blocking restrictions because they share a main control processing unit, and these WSSs are placed into a serial processing queue, while other WSSs can be placed into a concurrent processing queue for concurrent execution. The horizontal axis represents serially executing WSS boards, and the vertical axis represents parallel executing WSS boards. The grouping execution situation is as shown in FIG. 13.
(7) The network controller starts concurrent processing tasks, and for each concurrently executed WSS addition task, distributes media channel settings for all channels in batch at a time. For each serially executed WSS configuration task, it is executed sequentially according to the serial execution list, and during the execution, media channel configurations of all channels are also distributed sequentially until all creations are completed. Through the above process, all media channels on the rerouting paths are added.

A complete rerouting operation includes completion of operations of deleting original paths and adding rerouting paths, and completion of service path recovery.

### Embodiment 3:

On the basis of the method described in Embodiment 1, the present invention, in combination with specific application scenarios and by means of technical expressions in relevant scenarios, describes the implementation process in the characteristic scenario of the present invention.

This embodiment takes the second implementation, i.e., batch rerouting under WSS networking in the service correlation strategy, as an example, and the process of applying the method of the present invention in the specific application scenario as shown in FIG. 4 is as follows:
(1) When a fiber interruption occurs and rerouting is triggered, the network controller obtains the WSS list of the original paths and rerouting paths of each service routing direction.
   Service A->B original path: A0, A2, C1, C2, B2, B0. Rerouting path: A0, A3, E2, E1, C3, C2, B2, B0.
   Service A->E original path: A0, A2, C1, C3, E1, E0. Rerouting path: A0, A3, E2, E0.
   Service B->D original path: B0, B2, C2, C1, A2, A4, D2, D0. Rerouting path: B0, B3, D1, D0.
(2) As shown in FIG. 6, the network controller aggregates all operations of media channels to be deleted onto each WSS assembly, and records them in the corresponding relation table, including the total number of wavelengths. The vertical direction shows that the WSS board can be operated in combination. For example, WSS A0 needs centralized operations for the services of F1 set (20 wavelengths) and F2 set (30 wavelengths), totaling 50 wavelengths; and A2 needs centralized operations for the services of F1 set (20 wavelengths), F2 set (30 wavelengths), and F3 set (15 wavelengths), totaling 65 wavelengths.
(3) The network controller, according to the current setting strategy, applies the service correlation strategy: when there is a service correlation issue, all channel services need to be grouped, assuming that the number of configurable channels per rpc operation is set to 30. Then, all WSSs in aggregating operations, as long as they have more than 30 services, need to be grouped. The grouping execution situation is as shown in FIG. 8.
(4) The network controller starts concurrent processing tasks, and for each concurrently executed WSS configuration task, distributes media channel deletion for all channels in batch at a time. For each serially executed WSS configuration task, it is executed sequentially according to the serial execution list, and during the execution, media channel configurations of all channels are also distributed sequentially until all deletions are completed. Through the above process, that is, a batch rerouting path deletion process is completed, all media channels on the original paths are deleted.
(5) All operations of media channels to be added are aggregated onto each WSS assembly. As shown in FIG. 12, according to the service routing directions and routing information, the wavelengths to be added for each service involved in each WSS are aggregated, and the total number of wavelengths to be configured on each WSS single board is counted. For example, WSS board A0 needs centralized operations for the services of F1 (20) and F2 (30); and A2 needs centralized operations for the services of F1 (20), F2 (30), and F3 (15).
(6) The network controller, according to the service correlation strategy: when there is a service correlation issue, all channel configurations need to be grouped, assuming that the number of configurable channels per rpc operation is set to 30. Then, all WSSs in aggregating operations, as long as they have more than 30 services, need to be grouped. The grouping execution situation is as shown in FIG. 14.
(7) The network controller starts concurrent processing tasks, and for each concurrently executed WSS addition task, distributes media channel settings for all channels in batch at a time. For each serially executed WSS configuration task, it is executed sequentially according to the serial execution list, and during the execution, media channel configurations of all channels are also distributed sequentially until all creations are completed. Through the above process, all media channels on the rerouting paths are added.

A complete rerouting operation includes completion of operations of deleting original paths and adding rerouting paths, and completion of service path recovery.

### Embodiment 4:

On basis of the method described in Embodiment 1, the present invention, in combination with specific application scenarios and by means of technical expressions in relevant scenarios, describes the implementation process in the characteristic scenario of the present invention.

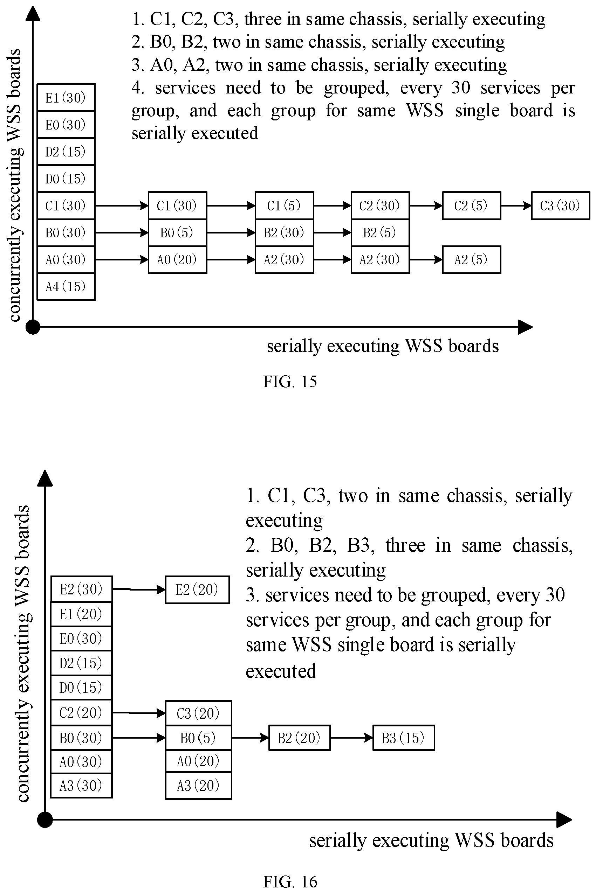

This embodiment takes the second implementation, i.e., batch rerouting under WSS networking in the combined deployment correlation and service correlation strategy, as an example, and the process of applying the method of the present invention in the specific application scenario as shown in FIG. 4 is as follows:
(1) When a fiber interruption occurs and rerouting is triggered, the network controller obtains the WSS list of the original paths and rerouting paths of each service routing direction.
   Service A->B original path: A0, A2, C1, C2, B2, B0. Rerouting path: A0, A3, E2, E1, C3, C2, B2, B0.
   Service A->E original path: A0, A2, C1, C3, E1, E0. Rerouting path: A0, A3, E2, E0.
   Service B->D original path: B0, B2, C2, C1, A2, A4, D2, D0. Rerouting path: B0, B3, D1, D0.
(2) As shown in FIG. 6, the network controller aggregates all operations of media channels to be deleted onto each WSS assembly, and records them in the corresponding relation table, including the total number of wavelengths. The vertical direction shows that the WSS board can be operated in combination. For example, WSS A0 needs centralized operations for the services of F1 set (20 wavelengths) and F2 set (30 wavelengths); and A2 needs centralized operations for the services of F1 set (20 wavelengths), F2 set (30 wavelengths), and F3 set (15 wavelengths).
(3) The network controller, according to the combined deployment correlation and service correlation strategy: when both deployment correlation constraints and service correlation constraints exist, grouping is first performed according to service correlation, and then for each WSS, grouping is performed according to service correlation. The grouping execution situation is as shown in FIG. 15.
(4) The network controller starts concurrent processing tasks, and for each concurrently executed WSS configuration task, distributes media channel deletion for all channels in batch at a time. For each serially executed WSS configuration task, it is executed sequentially according to the serial execution list, and during the execution, media channel configurations of all channels are also distributed sequentially until all deletions are completed. Through the above process, that is, a batch rerouting path deletion process is completed, all media channels on the original paths are deleted.
(5) All operations of media channels to be added are aggregated onto each WSS assembly. As shown in FIG. 12, according to the service routing directions and routing information, the wavelengths to be added for each service involved in each WSS are aggregated, and the total number of wavelengths to be configured on each WSS single board is counted. For example, WSS board A0 needs centralized operations for the services of F1 (20) and F2 (30); and A2 needs centralized operations for the services of F1 (20), F2 (30), and F3 (15).
(6) The network controller, according to the combined deployment correlation and service correlation strategy: grouping is first performed according to deployment correlation, and then for each WSS, grouping is performed according to service correlation. The grouping execution situation is as shown in FIG. 16.
(7) The network controller starts concurrent processing tasks, and for each concurrently executed WSS addition task, distributes media channel settings for all channels in batch at a time. For each serially executed WSS configuration task, it is executed sequentially according to the serial execution list, and during the execution, media channel configurations of all channels are also distributed sequentially until all creations are completed. Through the above process, all media channels on the rerouting paths are added.

A complete rerouting operation includes completion of operations of deleting original paths and adding rerouting paths, and completion of service path recovery.

### Embodiment 5:

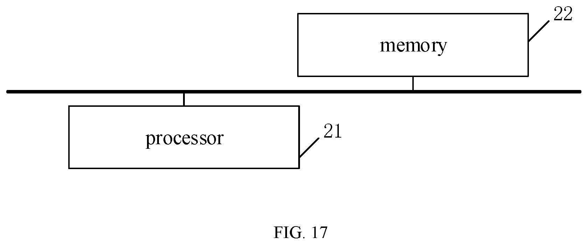

On the basis of Embodiment 1, this embodiment further provides a batch rerouting apparatus for a mesh white-box optical network. As shown in FIG. 17, it is an architecture schematic diagram of the batch rerouting apparatus for a mesh white-box optical network according to an embodiment of the present invention. The batch rerouting apparatus for a mesh white-box optical network in this embodiment can be understood as a network controller in practical application scenarios, and the apparatus is also referred to as a first batch rerouting apparatus for a mesh white-box optical network in subsequent embodiments. The batch rerouting apparatus for a mesh white-box optical network in this embodiment includes one or more processors 21 and a memory 22. In FIG. 17, one processor 21 is taken as an example.

The processor 21 and the memory 22 may be connected via a bus or other means, and in FIG. 17, connection via a bus is taken as an example.

The memory 22, as a non-volatile computer-readable storage medium, may be used to store non-volatile software programs and non-volatile computer-executable programs, such as the batch rerouting method for a mesh white-box optical network in Embodiment 1. The processor 21 executes the batch rerouting method for a mesh white-box optical network by running the non-volatile software programs and instructions stored in the memory 22.

The memory 22 may include high-speed random access memory, and may also include non-volatile memory, such as at least one magnetic disk storage device, flash memory device, or other non-volatile solid-state storage devices. In some embodiments, the memory 22 may optionally include memories located remotely relative to the processor 21, and these remote memories may be connected to the processor 21 via a network. Examples of the above network include, but are not limited to, the Internet, an intranet, a local area network, a mobile communication network, and combinations thereof.

The program instructions/modules are stored in the memory 22, and when executed by the one or more processors 21, perform the batch rerouting method for a mesh white-box optical network in Embodiment 1 above.

This embodiment further provides another batch rerouting apparatus for a mesh white-box optical network, which can be understood as a WSS device in practical application scenarios, and is also referred to as the second batch rerouting apparatus for a mesh white-box optical network in subsequent embodiments. The apparatus includes at least one processor; and a memory communicatively connected to the at least one processor; wherein the memory stores instructions executable by the at least one processor, and the instructions, when executed by the processor, are used to receive channel services from the batch rerouting apparatus for a mesh white-box optical network described in Embodiment 1, and execute the channel services to implement batch rerouting.

On the basis of the above apparatuses, this embodiment further provides a batch rerouting system for a mesh white-box optical network, characterized in comprising the above-mentioned first batch rerouting apparatus for a mesh white-box optical network and the second batch rerouting apparatus for a mesh white-box optical network, wherein the first batch rerouting apparatus for a mesh white-box optical network uses the batch rerouting method for a mesh white-box optical network described in Embodiment 1 to implement interaction with the second batch rerouting apparatus for a mesh white-box optical network.

It should be noted that, since the information interaction, execution process, and other contents between the modules and units in the above apparatuses and system are based on the same conception as the processing method embodiments of the present invention, specific details can be found in the description of the method embodiments of the present invention, and are not repeated here.

Those ordinary skilled in the art can understand that all or part of the steps of the various methods in the embodiments can be completed by a program instructing related hardware, and the program can be stored in a computer-readable storage medium, which may include: Read Only Memory (ROM), Random Access Memory (RAM), magnetic disk or optical disk, etc.

The above descriptions are merely preferred embodiments of the present invention and are not intended to limit the present invention. Any modifications, equivalent substitutions and improvements made within the spirit and principle of the present invention should be included in the protection scope of the present invention.

## Claims

1. A batch rerouting method for a mesh white-box optical network, **characterized in that** WSS configuration situation of each site is pre-stored in a network controller, the WSS configuration situation comprises information related to each main control processing unit and information related to WSS devices using each main control processing unit, and the method comprises:
acquiring each of original paths to be deleted and/or each of rerouting paths to be added;
determining channel services required to be executed by each WSS device according to each of the original paths and/or each of the rerouting paths;
allocating, according to the WSS configuration situation, all channel services into one or more task groups; wherein channel services of multiple WSS devices associated with each other are allocated into different task groups, and channel services of multiple WSS devices not associated with each other are allocated into the same task group; the multiple WSS devices associated with each other are multiple WSS devices that use a common main control processing unit to execute channel services, and the multiple WSS devices not associated with each other are multiple WSS devices each of which use an independent main control processing unit to execute channel services; and
distributing each task group sequentially, so that each WSS device executes the channel services in the task groups to implement batch rerouting.

2. The batch rerouting method for a mesh white-box optical network according to Claim 1, **characterized in that** the allocating, according to the WSS configuration situation, all channel services into one or more task groups specifically comprises:
according to the WSS configuration situation, sequentially allocating channel services in the remaining channel services of the i-th batch into the i-th task group, until all channel services are allocated into corresponding task groups; wherein the remaining channel services of the i-th batch are the channel services that have not been allocated to a task group after the allocation of the first i-1 task groups has been completed;
the allocating channel services in the remaining channel services of the i-th batch into the i-th task group specifically comprises: taking each main control processing unit as a first main control processing unit, respectively; searching, from all WSS devices corresponding to the channel services of the i-th batch, for a first WSS device that uses the first main control processing unit; and
allocating the channel services of one first WSS device into the i-th task group.

3. The batch rerouting method for a mesh white-box optical network according to Claim 2, **characterized in that**, when there is no constraint on the number of channel services that one WSS device is able to process in a single task group, the allocating the channel services of one first WSS device into the i-th task group specifically comprises:
allocating all channel services of one first WSS device into the i-th task group.

4. The batch rerouting method for a mesh white-box optical network according to Claim 2, **characterized in that**, when the number of channel services that one WSS device is able to process in a single task group is constrained to N, the allocating the channel services of one first WSS device into the i-th task group specifically comprises:
allocating N channel services of one first WSS device into the i-th task group, and retaining the remaining channel services of the first WSS device in the remaining channel services of the i-th batch for the next allocation.

5. The batch rerouting method for a mesh white-box optical network according to Claim 2, **characterized in that** the allocating the channel services of one first WSS device into the i-th task group further comprises:
allocating the channel services corresponding to the first WSS device having the largest number of channel services in the remaining channel services of the i-th batch into the i-th task group;
or, allocating the channel services corresponding to the first WSS device having the smallest number of channel services in the remaining channel services of the i-th batch into the i-th task group.

6. The batch rerouting method for a mesh white-box optical network according to Claim 1, **characterized in that** the distributing each task group sequentially specifically comprises:
distributing all channel services in the i-th task group to the corresponding WSS devices, and after all channel services in the i-th task group have been executed, distributing all channel services in the (i+1)-th task group to the corresponding WSS devices.

7. The batch rerouting method for a mesh white-box optical network according to Claim 6, **characterized in that** the distributing all channel services in the i-th task group is implemented based on netconf protocol.

8. The batch rerouting method for a mesh white-box optical network according to any one of Claims 1-7, **characterized in that** the determining channel services required to be executed by each WSS device according to each of the original paths and/or each of the rerouting paths specifically comprises:
determining, according to each original path, deletion operation channel services required to be executed by each WSS device, and determining, according to each rerouting path, addition operation channel services required to be executed by each WSS device; and
after the execution of each deletion operation channel service is completed, executing the addition operation channel services; or, after the execution of each addition operation channel service is completed, executing the deletion operation channel services; or, executing the deletion operation channel service and the addition operation channel service together.

9. The batch rerouting method for a mesh white-box optical network according to any one of Claims 1-7, **characterized in**, for a preset rerouting event, pre-calculating to obtain each of the task groups, pre-storing each of the task group, and distributing each of task groups when rerouting is triggered.

10. A batch rerouting apparatus for a mesh white-box optical network, **characterized in** comprising:
at least one processor; and a memory communicatively connected to the at least one processor; wherein, the memory stores instructions executable by the at least one processor, and the instructions, when executed by the processor, are used to perform the batch rerouting method for a mesh white-box optical network according to any one of Claims 1-9.

11. A batch rerouting apparatus for a mesh white-box optical network, **characterized in** comprising:
at least one processor; and a memory communicatively connected to the at least one processor; wherein the memory stores instructions executable by the at least one processor, and the instructions, when executed by the processor, are used to receive channel services from the batch rerouting apparatus for a mesh white-box optical network according to Claim 10, and execute the channel services to implement batch rerouting.

12. A non-volatile computer storage medium, **characterized in that** the computer storage medium stores computer-executable instructions, and the computer-executable instructions, when executed by one or more processors, are used to complete the batch rerouting method for a mesh white-box optical network according to any one of Claims 1-9.

13. A batch rerouting system for a mesh white-box optical network, **characterized in** comprising the batch rerouting apparatus for a mesh white-box optical network according to Claim 10 and the batch rerouting apparatus for a mesh white-box optical network according to Claim 11, wherein the batch rerouting apparatus for a mesh white-box optical network according to Claim 10 uses the batch rerouting method for a mesh white-box optical network according to any one of Claims 1-9 to implement interaction with the batch rerouting apparatus for a mesh white-box optical network according to Claim 11.
